# EUROPEAN PATENT APPLICATION

(11) **EP 3 534 573 A1**
(43) Date of publication of application: **04.09.2019**
(21) Application number: 17865742.5
(22) Date of filing: 20.10.2017
(51) Int. Cl.: H04L 12/70

(54) **CHAIN BUILDING DEVICE, TESTING DEVICE, TESTING SYSTEM, METHOD, AND RECORDING MEDIUM**

(30) Priority: 27.10.2016 JP 2016210191
(71) Applicant: NEC Corporation, Tokyo 108-8001 (JP)
(72) Inventor: ISHIDA Shinya, Tokyo 108-8001 (JP)
(74) Representative: Robson, Aidan John
(86) International application number: PCT/JP2017/038023
(87) International publication number: WO 2018/079440

(57) **Abstract**

In order to provide a technique for more easily conducting a test on a tested object included in a service function chain, a chain building device 100 includes: chain design unit 101 configured to design a service function chain constituted of a series of service functions 901 included in a communication network 900, based on a request for a communication service, test chain design unit 102 configured to design a test service function chain that passes through a service function 901 being a tested object and does not pass through a service function 901 not being the tested object among service functions 901 constituting the service function chain, and chain building unit 103 configured to build the service function chain and the test service function chain in the communication network 900.

## Description

### [Technical Field]

The present invention relates to a technique for testing a service function chain.

### [Background Art]

A communication carrier is shifting building of a communication service from a manner using a conventional hardware appliance to a manner using a virtual network function (VNF). The VNF is software that operates in a general-purpose calculator server and achieves a network function. The communication carrier can flexibly provide a communication service to a user by combining VNFs including desired functions and configuring a service function chain.

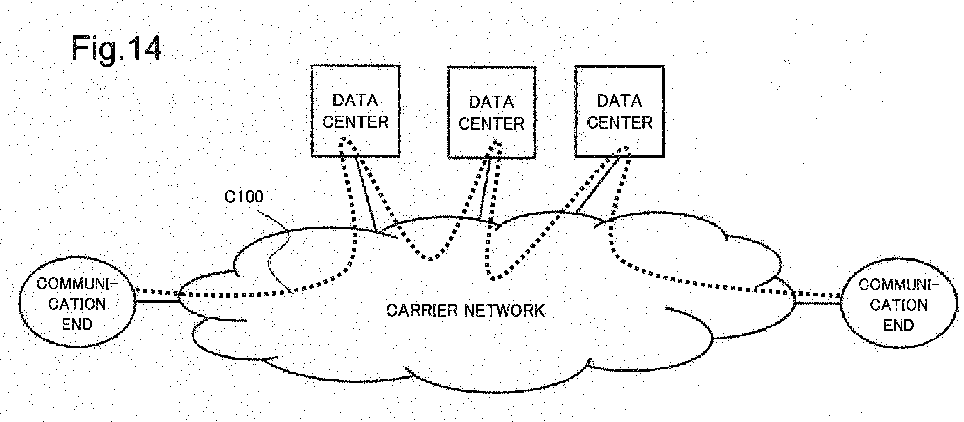

A service function chain connects a transmission end to a reception end of a user through a VNF deployed in a data center in a carrier network. Fig. 14 illustrates a specific example of a schematic outline of a service chain. A communication end of a user is connected to a carrier network by a wired or wireless medium. A plurality of data centers are disposed in the carrier network. A service function chain C100 that connects the communication ends of the user passes through each of the data centers on the way through the carrier network, and passes through a VNF operating in each of the data centers.

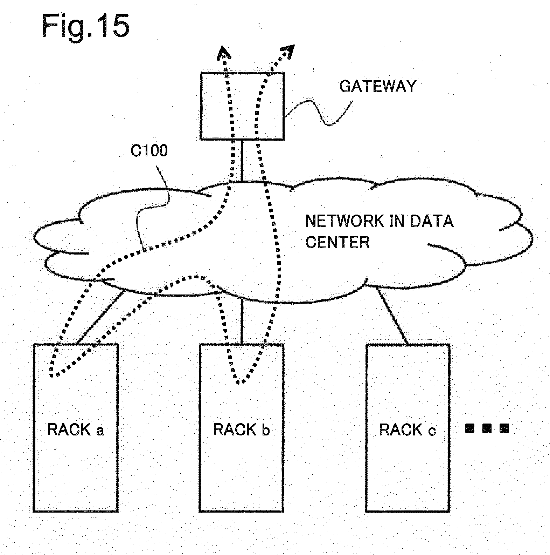

Further, a plurality of servers are included inside the data center. A calculator resource such as a central processing unit (CPU), a graphics processing unit (GPU), a memory, and a storage of each of the servers is used in such a manner as a virtual machine or a container. The VNF operates in a manner of such a virtual machine or a container. For example, it is assumed that a plurality of racks a to c as in Fig. 15 are included in one data center in Fig. 14. It is also assumed that a VNF of the service function chain C100 operates on a server included in each of the racks a and b. In this case, the service function chain C100 passes through a gateway of this data center, passes through the VNFs of the racks a and b, passes through the gateway again, and goes outside this data center. At this time, the racks, and the rack and the gateway are relayed therebetween with a network in this data center.

Even when the VNF is used herein, a testing environment is still needed as in a conventional manner in order to maintain desired service quality during designing, building, and operation of a communication service, namely, a service function chain.

NPL 1 describes one example of a technique related to a test of such a service function chain. This related technique classifies a packet in accordance with a policy by a packet classification means, and sends the classified packet to an appropriate service function chain by a packet transfer means. Then, this related technique tests the service function chain by a tester.

Specifically, the tester serves as a transmission source of a test traffic and outputs a packet. The output packet is classified by the packet classification means, and transferred along a predetermined transfer path to a VNF associated with a classification result by the packet transfer means. The packet output from the VNF is transmitted to the packet classification means, classified again, and then transferred to a next VNF by the packet transfer means, or is transferred to a next VNF without classification. The packet output from a VNF at an end of the service chain is transferred to the tester. The tester conducts a continuity test on the service function chain by receiving the sent packet from the end of the service function chain. Further, the tester calculates a delay by comparing a transmission time with a reception time of the packet, and calculates a throughput by measuring the number of packets and an amount of data arriving for a certain period of time.

Herein, an architecture such as mobile edge computing (MEC) in which a communication carrier provides not only a communication resource but also a calculator resource in an own network of the communication carrier is discussed. An operation manner in such a way that a user embeds a unique VNF or application in a network of a communication carrier as a part of a service function chain is conceivable in such an architecture.

### [Citation List]

### [Non Patent Literature]

[NPL 1] R. Gu, C. Li, and H. Assarpour, "Test Report of Service Function Chain with NSH in Cloud Datacenter," IETF I-D: draft-gu-sfc-test-report-sfc-nsh-00, October 2015.

### [Summary of Invention]

### [Technical Problem]

A problem in the above-described operation manner is that a VNF or an application embedded in a service function chain by a user by using a calculator resource provided from a communication carrier is not included in management of the communication carrier. In other words, a user himself/herself needs to perform maintenance in such a way that the VNF or the application continues to operate as expected. Since the VNF or the application is deployed in the network of the communication carrier, the user cannot directly input a communication traffic for testing the VNF or the application to a tested object. Further, the user cannot know details of the inside of the carrier network including a specific configuration of the service function chain, either.

It is conceivable herein that a tester as in NPL 1 is previously installed in a service function chain even in such an operation manner. However, preparing a tester for each chain is unrealistic in terms of cost. It is also conceivable that the number of testers is reduced and a tester is rearranged for each test between chains, but operation of a chain becomes extremely complicated.

Therefore, a test traffic needs to be caused to flow from both ends of a service function chain in order to test the service function chain in such an operation manner. However, in this case, a user cannot test a tested object in isolation. Further, in this case, a test traffic is influenced by chains around a VNF or an application being a tested object, and thus it is difficult to separate a problem portion.

The present invention has been made in view of the above-described problem. In other words, an objective of the present invention is to provide a technique for more easily conducting a test on a tested object included in a service function chain.

### [Solution to Problem]

A chain building device according to an exemplary aspect of the invention comprises: chain design means for designing a service function chain constituted of a series of service functions included in a communication network, based on a request for a communication service, test chain design means for designing a test service function chain that passes through a service function being a tested object and does not pass through a service function not being the tested object among service functions constituting the service function chain, and chain building means for building the service function chain and the test service function chain in the communication network.

And, a testing device according to an exemplary aspect of the invention comprises: traffic generation measurement means for generating a test traffic and inputting the test traffic to each of the service function chain and the test service function chain being built by the chain building device mentioned above, and thus measuring a state and performance of the service function chain and the test service function chain, and measurement result comparison means for comparing measurement results of the service function chain and the test service function chain.

And, a testing system according to an exemplary aspect of the invention comprises: the chain building device mentioned above, packet classification means for classifying a packet in such a way as to which service function chain in the communication network the packet is distributed to, and packet transfer means for controlling the communication network in such a way as to transfer the packet along a transfer path of a service function chain into which the packet is classified by the packet classification means.

And, a method according to an exemplary aspect of the invention, by a computer device, comprises: designing a service function chain constituted of a series of service functions included in a communication network, based on a request for a communication service, designing a test service function chain that passes through a service function being a tested object and does not pass through a service function not being the tested object among service functions constituting the service function chain, and building the service function chain and the test service function chain in the communication network.

And, a program according to an exemplary aspect of the invention causes a computer device to execute: a chain design step of designing a service function chain constituted of a series of service functions included in a communication network, based on a request for a communication service, a test chain design step of designing a test service function chain that passes through a service function being a tested object and does not pass through a service function not being the tested object among service functions constituting the service function chain, and a chain building step of building the service function chain and the test service function chain in the communication network. The program may be stored in a storage medium.

And, another method according to an exemplary aspect of the invention, by a computer device, comprises: generating a test traffic and inputting the test traffic to each of the service function chain and the test service function chain built by the method mentioned above, and thus measuring a state and performance of the service function chain and the test service function chain, and comparing measurement results of the service function chain and the test service function chain.

And, another program according to an exemplary aspect of the invention causes a computer device to execute: a traffic generation measurement step of generating a test traffic and inputting the test traffic to each of the service function chain and the test service function chain being built by causing a computer device to execute the program mentioned above, and thus measuring a state and performance of the service function chain and the test service function chain, and a measurement result comparison step of comparing measurement results of the service function chain and the test service function chain.

### [Advantageous Effects of Invention]

The present invention is able to provide a technique for more easily conducting a test on a tested object included in a service function chain.

### [Brief Description of Drawings]

Fig. 1 shows a block diagram illustrating a configuration of a testing system as a first example embodiment of the present invention.
Fig. 2 shows a diagram illustrating one example of a hardware configuration of the testing system as the first example embodiment of the present invention.
Fig. 3 shows a diagram illustrating a specific example of a configuration of a communication network in the first example embodiment of the present invention.
Fig. 4 shows a diagram illustrating a specific example of a configuration of a data center in the first example embodiment of the present invention.
Fig. 5 shows a flowchart describing an operation of a chain building device in the first example embodiment of the present invention.
Fig. 6 shows a diagram illustrating a configuration of a service function chain required in a specific example of the first example embodiment of the present invention.
Fig. 7 shows a diagram illustrating a configuration of the service function chain designed in the specific example of the first example embodiment of the present invention.
Fig. 8 shows a diagram illustrating a configuration of a test service function chain designed in the specific example of the first example embodiment of the present invention.
Fig. 9 shows a block diagram illustrating a configuration of a testing system as a second example embodiment of the present invention.
Fig. 10 shows a diagram illustrating one example of a hardware configuration of a testing device in the second example embodiment of the present invention.
Fig. 11 shows a flowchart describing an operation of the testing device in the second example embodiment of the present invention.
Fig. 12 shows a block diagram illustrating a configuration of a testing system as a third example embodiment of the present invention.
Fig. 13 shows a flowchart describing an operation of a testing device in the third example embodiment of the present invention.
Fig. 14 shows a diagram specifically describing a schematic outline of a service function chain.
Fig. 15 shows another diagram specifically describing a schematic outline of the service function chain.

### [Example Embodiment]

Hereinafter, example embodiments of the present invention will be described in detail with reference to the drawings.

### (First example embodiment)

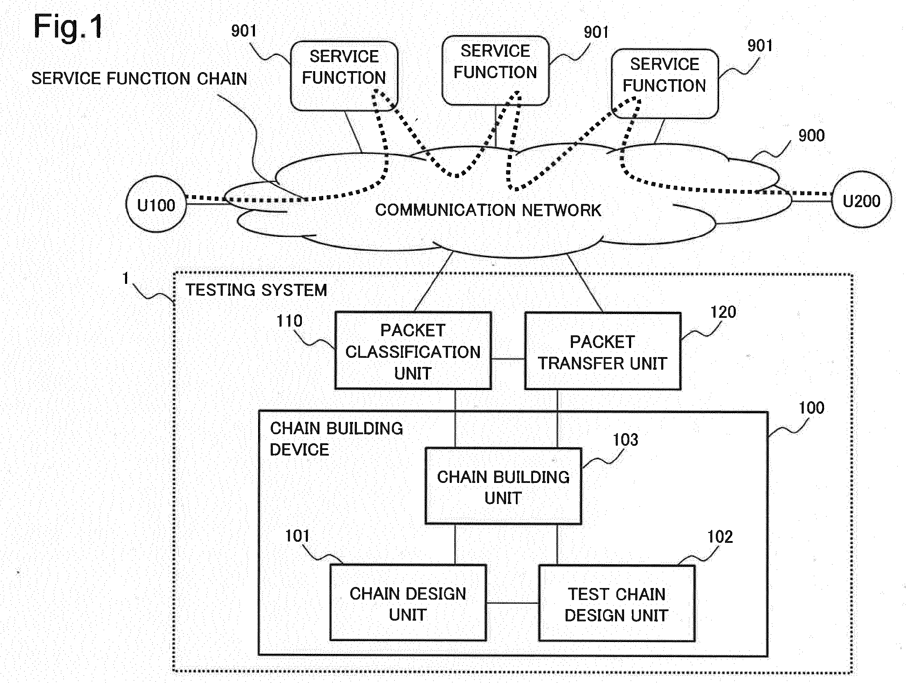

A configuration of a testing system 1 as a first example embodiment of the present invention is illustrated in Fig. 1. In Fig. 1, the testing system 1 includes a chain building device 100, a packet classification unit 110, and a packet transfer unit 120. The chain building device 100 further includes a chain design unit 101, a test chain design unit 102, and a chain building unit 103. Further, the testing system 1 is connected to a communication network 900.

Herein, the communication network 900 provides a communication service by a service function chain. The service function chain connects a communication end U100 to a communication end U200 of a user housed in the communication network 900 with a series of service functions 901. Hereinafter, the service function chain is also simply referred to as a chain.

The service function 901 is a function provided by using a calculator resource included in the communication network 900. For example, the service function 901 is achieved as a VNF or an application. Further, examples of the service function 901 include a service function 901 provided by a communication carrier being a manager of the communication network 900. Further, a service function 901 unique to a user by using the calculator resource in the communication network 900 may be introduced as another service function 901. Herein, a kind of a service provided by a certain service function 901 may be the same as or different from a kind of a service provided by another service function 901. Note that Fig. 1 illustrates the three service functions 901, but the number of the service functions 901 in the communication network 900 is not limited to three. Further, Fig. 1 illustrates an example in which the service function chain is constituted by the series of all the three service functions 901 included in the communication network 900. However, the service function chain may be constituted by a series of the service functions 901 selected from the service functions 901 that can be provided in the communication network 900.

The chain building device 100 is a device that builds a service function chain in the communication network 900.

The packet classification unit 110 classifies a packet in such a way as to which service function chain in the communication network 900 the packet is distributed to.

The packet transfer unit 120 controls the communication network 900 in such a way as to transfer the classified packet along a transfer path of the service function chain to which the packet is distributed. Specifically, the packet transfer unit 120 holds a transfer rule of the packet and controls each physical or logical switch in the communication network 900.

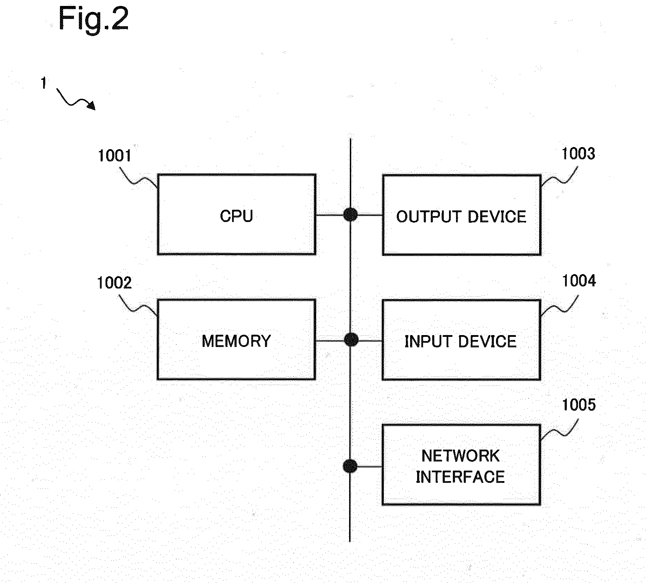

Herein, the testing system 1 can be constituted by a computer device including a hardware element as illustrated in Fig. 2. In Fig. 2, the testing system 1 includes a central processing unit (CPU) 1001, a memory 1002, an output device 1003, an input device 1004, and a network interface 1005. The memory 1002 is constituted by a random access memory (RAM), a read only memory (ROM), an auxiliary storage device (such as a hard disk), and the like. The output device 1003 is constituted by a device that outputs information, such as a display device and a printer. The input device 1004 is constituted by a device that receives an input of a user operation, such as a keyboard and a mouse. The network interface 1005 is an interface connected to the communication network 900. In this case, each of functional blocks in the testing system 1 is constituted by the CPU 1001 that reads and executes a computer program stored in the memory 1002, and controls each of the units.

Note that the hardware configuration of the testing system 1 is not limited to the configuration illustrated in Fig. 2. For example, each of the functional blocks constituting the testing system 1 doesn't need to be achieved on a physically identical computer device including the hardware element as illustrated in Fig. 2. For example, each of the functional blocks constituting the testing system 1 may be achieved by being distributed to a plurality of physical, logical, or virtual servers.

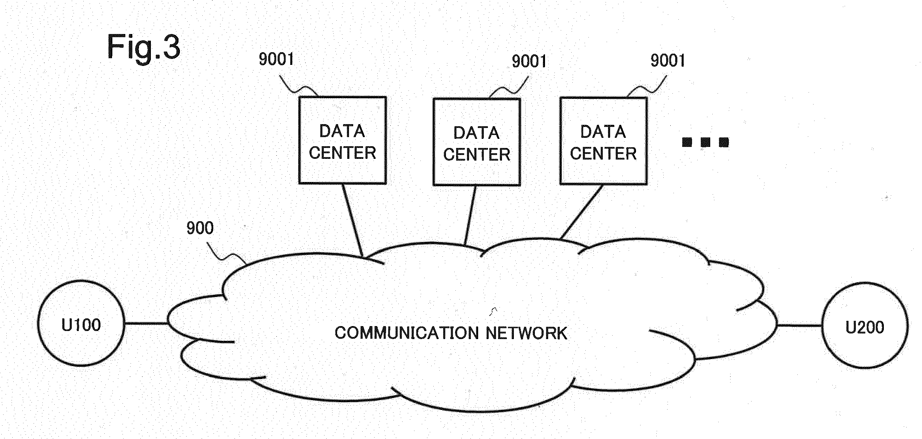

Further, one example of a configuration of a network system including the communication network 900 and the service function 901 is illustrated in Figs. 3 to 4. In Fig. 3, the network system includes the communication network 900 and one or more data centers 9001. Herein, the three data centers 9001 are illustrated in Fig. 3, but the number of the data centers 9001 may be one or more and is not limited to three.

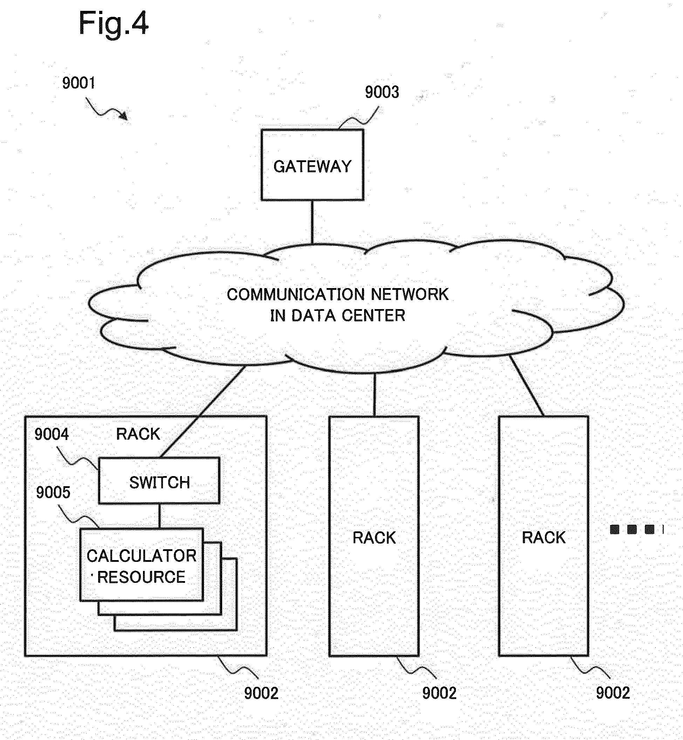

Further, as illustrated in Fig. 4, one data center 9001 includes one or more racks 9002 and a gateway 9003. Herein, the three racks 9002 are illustrated in Fig. 4, but the number of the racks 9002 included in one data center 9001 may be one or more and is not limited to three.

One rack 9002 further includes a switch 9004 and one or more calculator resources 9005. The switch 9004 may be a hardware element, but may also be achieved as software on the calculator resource 9005. Further, the calculator resource 9005 is constituted by a physical server or a resource that can constitute a calculator logically. Further, the calculator resource 9005 can communicate with an outside via a communication network in the data center 9001, the switch 9004, and the gateway 9003. At this time, the service function 901 is achieved by the calculator resource 9005. Herein, the three calculator resources 9005 are illustrated in Fig. 4, but the number of the calculator resources 9005 included in one rack 9002 may be one or more and is not limited to three.

Note that the configuration of the communication network 900 is not limited to the configuration illustrated in Figs. 3 to 4.

Next, details of each of the functional blocks of the chain building device 100 is described.

The chain design unit 101 designs the service function chain constituted by the series of the service functions 901 included in the communication network 900, based on a request for a communication service.

For example, the chain design unit 101 may acquire information indicating a configuration of a chain as a request for a communication service, and design a service function chain, based on the information indicating the configuration of the chain. In this case, the chain design unit 101 may acquire the information indicating the configuration of the chain by including a graphical user interface (GUI) that can generate and edit the configuration of the chain and an editor that can generate and edit the configuration of the chain in structural text form. Alternatively, the chain design unit 101 may acquire requirement information about a chain as a request for a communication service, and design a service function chain by automatically calculating a configuration of the chain, based on the acquired requirement information. The requirement information about the chain may include, for example, information indicating a kind of the service function 901 desired to be included in the chain. Note that a request for a communication service is typically input by a user and a manager of the communication network 900.

At this time, for example, the service function chain designed based on a service request of communication may include the service function 901 introduced by the user. The service function 901 introduced by the user is different from the service function 901 provided by the manager and the like of the communication network 900. For example, the service function 901 introduced by the user is newly introduced differently from the service function 901 provided by the manager and the like, based on the request for the communication service input by the user.

Further, the chain design unit 101 outputs configuration information about the designed service function chain. The configuration information about the service function chain includes, for example, information indicating each of a kind, the number, an arrangement place of the service function 901, a transfer path between the service functions 901, and the like. An output format may be data and a file on the memory 1002, or may be a message of a communication protocol.

The test chain design unit 102 designs a test service function chain for the service function chain designed by the chain design unit 101. The test service function chain is a chain configured to pass through the service function 901 being a tested object and not to pass through the service function 901 not being a tested object among the service functions 901 constituting the service function chain.

Note that information indicating which service function 901 is a tested object may be determined by an input by a user or a manager. Alternatively, when the service function 901 introduced by a user is included in the service function chain, the service function 901 introduced by the user may be applied as a tested object.

Further, a case where a plurality of service functions 901 being tested objects are included in a service function chain is described. In this case, the test chain design unit 102 may generate, for each of the service functions 901 being a tested object, a test service function chain that passes through only the service function 901. In this case, test service function chains as many as the number of the service functions 901 being tested objects are generated. Further, the test chain design unit 102 may generate a test service function chain that passes through only a part or all of a plurality of service functions 901 being tested objects and does not pass through another service function 901. Further, the test chain design unit 102 may generate test service function chains for both of them.

Further, the test chain design unit 102 outputs configuration information about the designed test service function chain. One example of the configuration information about the test service function chain and an output format is similar to the configuration information about the service function chain described above.

The chain building unit 103 builds the service function chain and the test service function chain in the communication network 900. For example, the chain building unit 103 generates an instance of the service function 901 included in each chain by using the calculator resource 9005. Further, for example, the chain building unit 103 performs setting related to network control for transferring a packet between the service functions 901 along a transfer path of a corresponding chain. The building processing is performed on the packet classification unit 110 and the packet transfer unit 120. For example, the chain building unit 103 can build a service function chain and a test service function chain by using a known technique described in NPL 1.

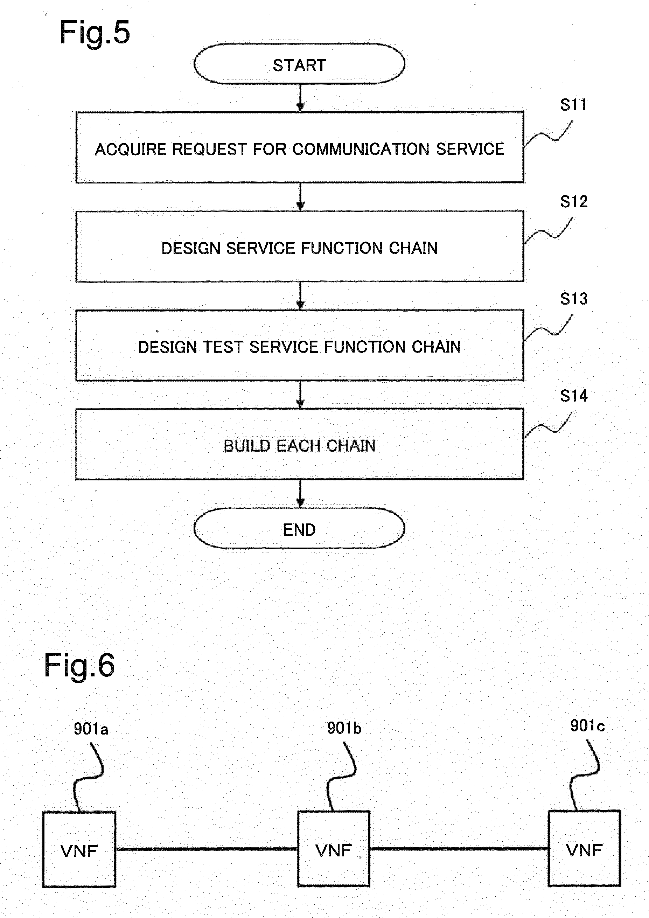

An operation of the chain building device 100 constituted as described above is described with reference to Fig. 5.

In Fig. 5, first, the chain design unit 101 acquires a request for a communication service (Step S11).

As described above, the chain design unit 101 may acquire information indicating a configuration of a chain as a request for a communication service via a GUI and an editor. Alternatively, as described above, the chain design unit 101 may acquire requirement information about the chain as a request for a communication service.

Next, the chain design unit 101 designs a service function chain, based on the request for the communication service (Step S12).

Next, the test chain design unit 102 designs a test service function chain for the chain designed by the chain design unit 101 (Step S13).

As described above, the test service function chain is a chain that passes through the service function 901 being a tested object and does not pass through the service function 901 not being a tested object among the service functions 901 constituting the service function chain.

Further, as described above, when the service function 901 introduced by a user is included in the service function chain, the corresponding service function 901 is a tested object.

Next, the chain building unit 103 builds the service function chain designed in Step S12 and the test service function chain designed in Step S13 in the communication network 900 (Step S14).

As described above, the operation of the chain building device 100 is finished.

Next, the operation of the chain building device 100 is illustrated with a specific example.

It is assumed in this specific example that the chain design unit 101 acquires information indicating a configuration of a service function chain illustrated in Fig. 6 as a request for a communication service (Step S11).

The configuration of the service function chain illustrated in Fig. 6 includes a VNF 901a, a VNF 901b, and a VNF 901c. It is assumed herein that the VNF 901b is the service function 901 introduced by a user. It is also assumed that the VNFs 901a and 901c are the service functions 901 provided by a communication carrier which manages the communication network 900.

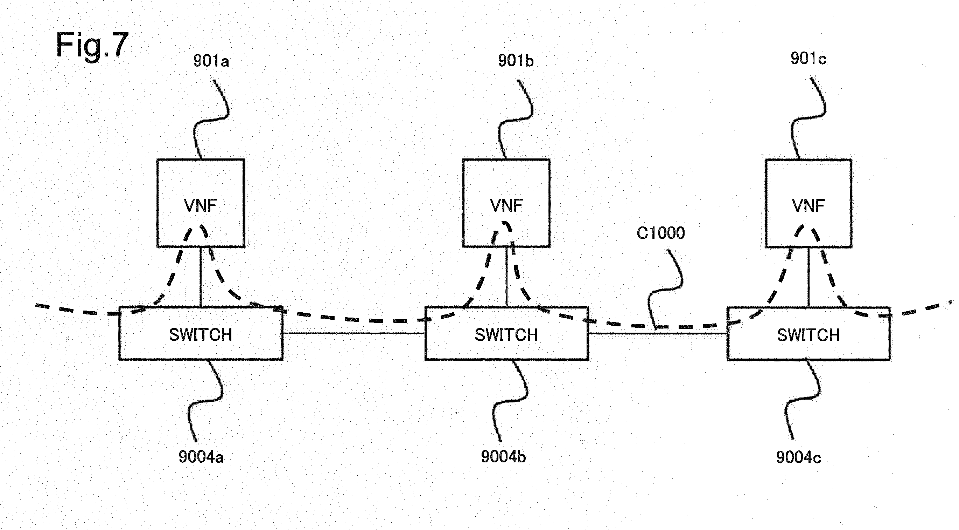

Next, it is assumed that the chain design unit 101 designs a chain C1000 as illustrated in Fig. 7 in order to achieve the configuration of the service function chain illustrated in Fig. 6 (Step S12).

In Fig. 7, switches 9004a to 9004c are switches 9004 for switching between an input traffic and an output traffic of the VNFs 901a to 901c, respectively. These switches 9004a to 9004c are mounted as hardware or software that operates on calculators in racks 9002 in which the associated VNFs 901a to 901c are deployed.

Note that Fig. 7 illustrates a simplified diagram, but connection is made as follows between the switches 9004a and 9004b and between the switches 9004b and 9004c.

First, a case where the VNFs 901a and 901b at both ends are located in different racks 9002 in the same data center 9001 is described. In this case, the switches 9004a and 9004b are connected to each other via a network in the data center 9001. The same also applies to the connection between the switches 9004b and 9004c.

Further, a case where the VNFs 901a and 901b at both ends are located in different data centers 9001 is described. In this case, the switches 9004a and 9004b are connected to each other via networks in both of the data centers 9001 and one or more paths passing through the networks between the data centers 9001. The same also applies to the connection between the switches 9004b and 9004c.

Note that the VNFs 901a and 901b at both ends may be located in the same rack 9002. In this case, the switches 9004a and 9004b are constituted by the same switch 9004. Therefore, a path from the VNF 901a to the VNF 901b turns back at the switch 9004a in such a way of the VNF 901a - the switch 9004a - the VNF 901b.

In this way, the chain design unit 101 calculates a place at which each of the VNFs 901a to 901c is disposed and a group of paths following the VNFs 901a to 901c in order in Step S11. Then, the chain design unit 101 outputs configuration information about the chain C1000.

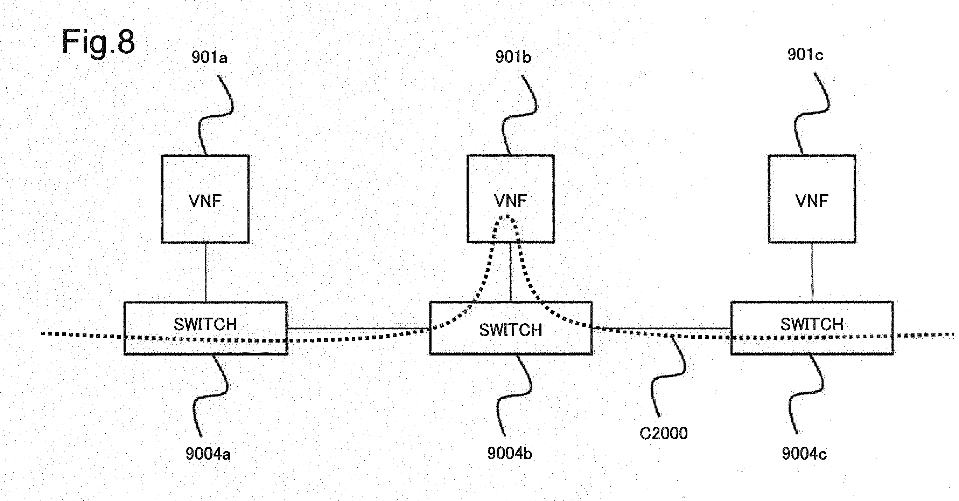

Next, the test chain design unit 102 designs a chain C2000 illustrated in Fig. 8 as a test service function chain for the chain C1000 designed as illustrated in Fig. 7 (Step S13).

Specifically, the test chain design unit 102 extracts the VNF 901b introduced by the user as a tested object in the chain C1000. By referring to the configuration information about the chain C1000, it can be extracted that the VNF 901b is introduced by the user. Then, the test chain design unit 102 calculates a path (transfer path) that passes through the VNF 901b extracted as a tested object and does not pass through the VNFs 901a and 901c in the chain C1000. Then, the test chain design unit 102 designs the chain C2000 having the calculated path.

The chain C2000 designed in such a manner passes through a path obtained by removing, from the path of the chain C1000, a returning portion of the VNFs 901a and 901c through which the path does not pass.

Next, the chain building unit 103 builds the chains C1000 and C2000 in the communication network 900 (Step S14). As described above, for example, the chain building unit 103 may build these chains by using the technique described in NPL 1.

As described above, the description of the specific example is finished.

Next, an effect of the first example embodiment of the present invention is described.

The testing system as the first example embodiment of the present invention can more easily conduct a test on a tested object included in a service function chain.

That reason is described as follows. In the present example embodiment, the chain design unit designs a service function chain constituted by a series of service functions included in a communication network, based on a request for a communication service. Then, the test chain design unit designs a test service function chain for the designed service function chain. The test service function chain is a chain that passes through the service function being a tested object and does not pass through the service function not being a tested object among the service functions constituting the designed service function chain. The chain building unit then builds the service function chain and the test service function chain in the communication network.

In this way, a test service function chain that passes through only a service function unique to a user in a service function chain that achieves a requested communication service from a user is built in the present example embodiment. Therefore, the user can directly input a traffic to the unique service function deployed in a carrier network, and easily conduct a test.

### (Second example embodiment)

Next, a second example embodiment of the present invention is described in detail with reference to the drawings. Note that, in each of the drawings referred in description of the present example embodiment, the same configuration and steps similarly operating as those in the first example embodiment of the present invention have the same reference signs, and detailed description thereof is omitted in the present example embodiment.

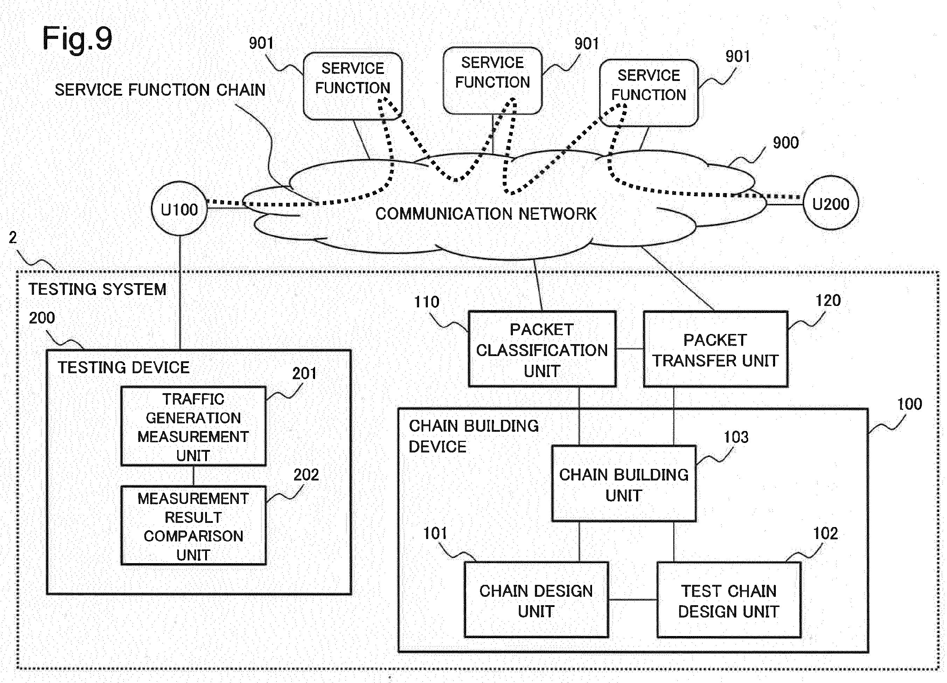

First, a configuration of a testing system 2 as a second example embodiment of the present invention is illustrated in Fig. 9. In Fig. 9, the testing system 2 includes a testing device 200 in addition to the same configuration as that of the testing system 1 as the first example embodiment of the present invention. The testing device 200 includes a traffic generation measurement unit 201 and a measurement result comparison unit 202.

The testing device 200 is a device that conducts a test by using a service function chain and a test service function chain built by the chain building device 100. Further, the testing device 200 is connected to a communication end of the service function chain. Note that the testing device 200 is connected to a communication end U100 in Fig. 9, but may be connected to a communication end U200. Further, the testing devices 200 may be connected to each of the communication ends U100 and U200.

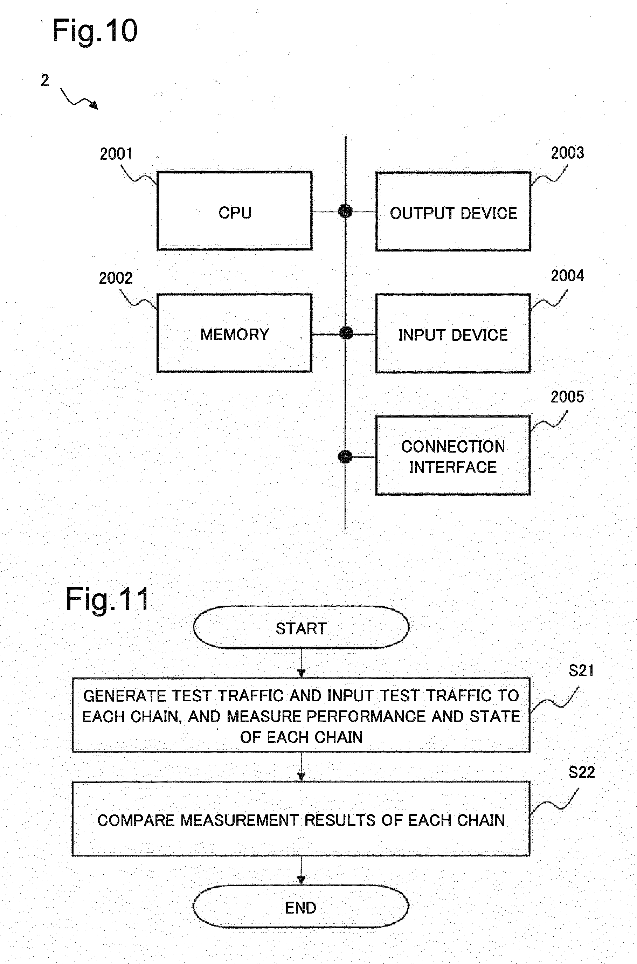

Herein, one example of a hardware configuration of the testing device 200 is illustrated in Fig. 10. In Fig. 10, the testing device 200 includes a CPU 2001, a memory 2002, an output device 2003, an input device 2004, and a connection interface 2005. The memory 2002 is constituted by a RAM, a ROM, an auxiliary storage device, and the like. The output device 2003 is constituted by a device that outputs information, such as a display device and a printer. The input device 2004 is constituted by a device that receives an input of a user operation, such as a keyboard and a mouse. The connection interface 2005 is an interface connected to the communication end U100. In this case, each of functional blocks in the testing device 200 is constituted by the CPU 2001 that reads and executes a computer program stored in the memory 2002, and controls each of the units. Note that the testing device 200 may be achieved on a computer device constituting the communication end U100. In this case, the testing device 200 doesn't need to include the connection interface 2005. However, the hardware configuration of the testing device 200 and each of the functional blocks thereof is not limited to the above-described configuration.

Next, details of each of the functional blocks of the testing device 200 are described.

The traffic generation measurement unit 201 generates a test traffic and inputs the test traffic to each of a service function chain and a test service function chain thereof. Then, the traffic generation measurement unit 201 acquires a traffic output from each of the chains via the communication end U100. In this way, the traffic generation measurement unit 201 measures a state and performance of each of the chains.

The measurement result comparison unit 202 compares measurement results of each of the chains. Then, for example, the measurement result comparison unit 202 outputs a comparison result to the output device 2003.

An operation of the testing system 2 constituted as described above is described with reference to Fig. 11.

Note that, it is assumed that the operation illustrated in Fig. 5 has already been performed on the testing system 2 similarly to the first example embodiment of the present invention before the following operation. In other words, it is assumed that a service function chain based on a request for a communication service and a test service function chain for the service function chain have already been built.

In Fig. 11, first, the traffic generation measurement unit 201 generates a test traffic and inputs the test traffic to each of the service function chain and the test service function chain thereof, and measures a state and performance of each of the chains (Step S21).

Next, the measurement result comparison unit 202 compares measurement results of each of the chains and outputs a comparison result (Step S22).

As described above, the operation of the testing system 2 is finished.

Next, the operation of the testing system 2 is illustrated with a specific example. As described in the specific example of the operation in the first example embodiment of the present invention, it is assumed in this specific example that the chain C1000 illustrated in Fig. 7 and the chain C2000 illustrated in Fig. 8 are built.

First, the traffic generation measurement unit 201 generates a test traffic, inputs the test traffic to the chains C1000 and C2000, and receives a response traffic (Step S21).

Note that, at this time, for a measurement of each of the chains, it is desirable that after completion from inputting of the traffic to one of the chains to reception, inputting of the traffic to the other chain is performed. However, when performance to be measured is not influenced or an influence is small to a negligible degree, measurements of each of the chains may be performed simultaneously.

Next, the measurement result comparison unit 202 compares a measurement results of the chain C1000 with a measurement result of the chain C2000, and outputs a comparison result (Step S22).

For example, it is assumed that delay times are compared. In this case, the measurement result comparison unit 202 calculates a delay difference obtained by subtracting a delay time of the chain C2000 from a delay time of the chain C1000. A delay in a section provided by a communication carrier other than the VNF 901b being a tested object can be estimated from the delay difference. Further, a position of a bottleneck for the delay can be estimated by comparing this delay difference with the delay time of the chain C2000. In this way, the measurement result comparison unit 202 outputs, for example, information indicating each of the delay in the section provided by the communication carrier and the position of the bottleneck for the delay.

As described above, the description of the specific example is finished.

Next, an effect of the second example embodiment of the present invention is described.

The testing system as the second example embodiment of the present invention can more easily conduct a test on a tested object included in a service function chain.

That reason is described as follows. This is because the present example embodiment includes the testing device in addition to the same configuration as that of the first example embodiment of the present invention. Then, in the testing device, the traffic generation measurement unit generates a test traffic and inputs the test traffic to each of a service function chain and a test service function chain thereof, and thus measures a state and performance of each of the chains. The measurement result comparison unit then compares measurement results of each of the chains.

In this way, in addition to building a service function chain that achieves a requested communication service from a user, a test service function chain that passes through only a service function unique to the user in the configuration of the built chain is also built in the present example embodiment. In other words, each of the chains is constituted in such a way as to be different in that whether or not to pass through a service function provided by a carrier. Then, since measurement results of each of the chains are compared and output in the present example embodiment, the user can easily separate a problem in a carrier network from a problem due to a service function unique to the user. As a result, the user can easily perform troubleshooting and a detailed performance evaluation related to the service function chain including the service function unique to the user.

### (Third example embodiment)

Next, a third example embodiment of the present invention is described in detail with reference to the drawings. Note that, in each of the drawings referred in description of the present example embodiment, the same configuration and steps similarly operating as those in the second example embodiment of the present invention have the same reference signs, and detailed description thereof is omitted in the present example embodiment.

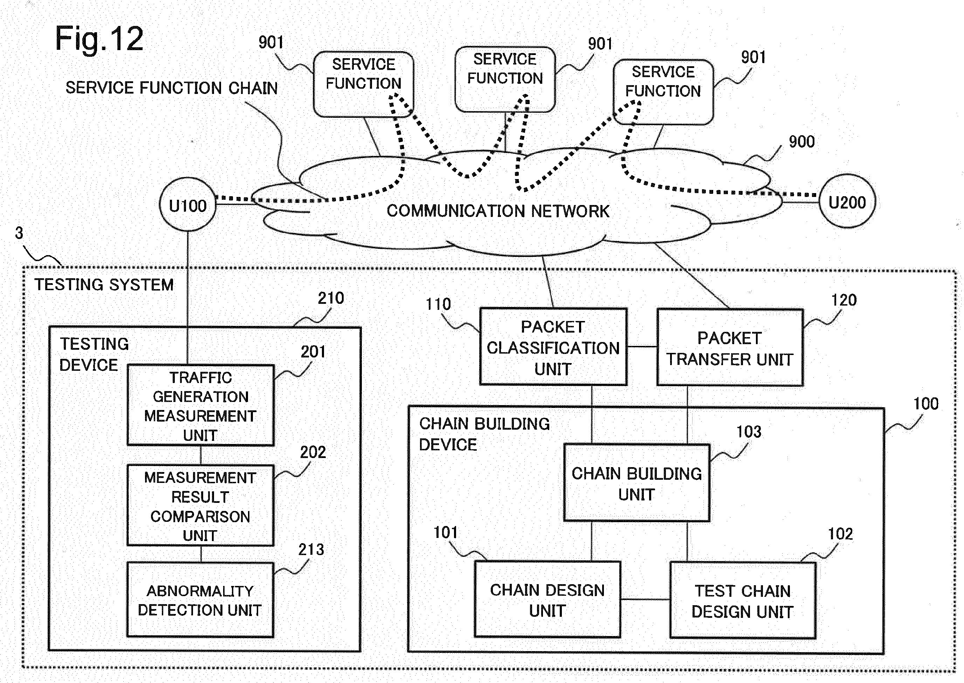

First, a configuration of a testing system 3 as a third example embodiment of the present invention is illustrated in Fig. 12. In Fig. 12, the testing system 3 is different from the testing system 2 as the second example embodiment of the present invention in that the testing system 3 includes a testing device 210 instead of the testing device 200. The testing device 210 further includes an abnormality detection unit 213 in addition to the same configuration as that of the testing device 200.

Note that the testing system 3 and each of functional blocks thereof can be constituted substantially similarly to the hardware configuration in the first and second example embodiments of the present invention described with reference to Figs. 2 and 10. However, the hardware configuration of the testing system 3 and each of the functional blocks thereof is not limited to the above-described configuration.

Next, the abnormality detection unit 213 of the testing device 210 is described.

The abnormality detection unit 213 detects an abnormal state of a service function 901 being a tested object, based on a comparison result by a measurement result comparison unit 202.

For example, the abnormality detection unit 213 may hold, for a value indicating a comparison result, one or a plurality of boundary values for defining a range of normal values or abnormal values. This boundary value may be previously provided as a fixed value, or may be dynamically updated by using values measured in a past test or statistics derived from the measured values.

Further, when detecting an abnormal state of the service function 901 being the tested object, the abnormality detection unit 213 outputs information indicating the abnormal state. For example, the abnormality detection unit 213 may output the information indicating the abnormal state to an output device 1003. Further, for example, the abnormality detection unit 213 may output the information indicating the abnormal state as a notification message by a message protocol and e-mail. Further, the abnormality detection unit 213 may output the information indicating the abnormal state by calling a remote procedure call (RPC) for a standby of a user system. Further, the abnormality detection unit 213 may write a state indicating the abnormal state as a message, such as a log, to local or remote storage and file.

Further, the abnormality detection unit 213 may control a traffic generation measurement unit 201 and a measurement result comparison unit 202 in such a way that the traffic generation measurement unit 201 and the measurement result comparison unit 202 repeatedly perform measurement and comparison, and repeatedly perform determination of an abnormal state. In this case, after the determination of an abnormal state, the abnormality detection unit 213 may perform control in such a way as to perform a next measurement after waiting for a predetermined period of time, or may perform control in such a way as to perform a measurement at each predetermined timing.

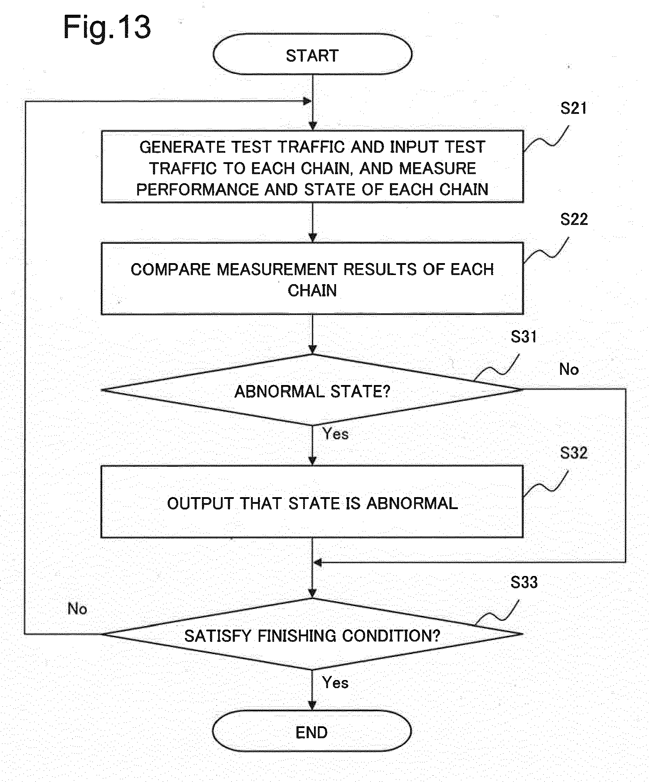

An operation of the testing system 3 constituted as described above is described with reference to Fig. 13. Note that it is assumed herein that a service function chain based on a request for a communication service and a test service function chain for the service function chain have already been built, similarly to the second example embodiment of the present invention.

First, the testing system 3 performs Steps S21 to S22 similarly to the second example embodiment of the present invention. In this way, measurement and comparison are performed on each of the chains.

Next, the abnormality detection unit 213 determines whether or not a service function 901 being a tested object is in an abnormal state, based on a comparison result in Step S22 (Step S31).

As described above, for example, the abnormality detection unit 213 may determine whether or not a value indicating the comparison result in Step S22 is included in a range by using one or a plurality of boundary values for defining a range of normal values or abnormal values.

When it is determined herein that the state is not abnormal (No in Step S31), the operation of the testing system 3 proceeds to Step S33.

On the other hand, when it is determined that the state is abnormal (Yes in Step S31), the abnormality detection unit 213 outputs that the state is abnormal (Step S32).

Next, when a predetermined finishing condition is not satisfied (No in Step S33), the testing system 3 repeats the operation from Step S21.

On the other hand, when a predetermined finishing condition is satisfied (Yes in Step S33), the testing system 3 finishes the operation.

Next, an effect of the third example embodiment of the present invention is described.

The testing system as the third example embodiment of the present invention can more easily detect an abnormal state of a tested object included in a service function chain.

That reason is described as follows. This is because, in the present example embodiment, the abnormality detection unit detects an abnormal state of a service function being a tested object, based on a comparison result by the measurement result comparison unit, in addition to the configuration similar to that of the second example embodiment of the present invention.

In this way, an abnormal state of a unique service function is detected in the present example embodiment, and thus a user can quickly make a response such as troubleshooting and redesign of a chain.

Note that the example in which three service functions are included in a service function chain is described as the specific example in each of the above-described example embodiments of the present invention. Each of the example embodiments is not limited to this, and is applicable regardless of the number of service functions included in a service function chain.

Further, the example in which a service function being a tested object in a service function chain is a service function unique to a user is mainly described in each of the above-described example embodiments of the present invention. However, a service function being a tested object is not limited to a service function unique to a user.

Further, the example in which each of the functional blocks in each of the above-described example embodiments of the present invention is achieved by a CPU executing a computer program stored in a memory is mainly described. Each of the example embodiments is not limited to this, and a part or the whole of each of the functional blocks or a combination of the functional blocks may be achieved by dedicated hardware.

Further, in each of the above-described example embodiments of the present invention, the operation of each of the devices described with reference to each of the flowcharts is stored as the computer program of the present invention in a storage device (storage medium) of a computer. The computer program may be then read and executed by the CPU. In such a case, the present invention includes a code of the computer program or the storage medium.

Each of the above-described example embodiments can be appropriately combined and carried out.

The invention is not limited to these embodiments and it will be understood by those of ordinary skill in the art that various changes in form and details may be made therein without departing from the spirit and scope of the present invention as defined by the claims.

This application is based upon and claims the benefit of priority from Japanese Patent Application No. 2016-210191, filed on October 27, 2016, the disclosure of which is incorporated herein in its entirety by reference.

### [Reference signs List]

- 1, 2, 3: Testing system
- 100: Chain building device
- 101: Chain design unit
- 102: Test chain design unit
- 103: Chain building unit
- 110: Packet classification unit
- 120: Packet transfer unit
- 200, 210: Testing device
- 201: Traffic generation measurement unit
- 202: Measurement result comparison unit
- 213: Abnormality detection unit
- 900: Communication network
- 901: Service function
- 1001, 2001: CPU
- 1002, 2002: Memory
- 1003, 2003: Output device
- 1004, 2004: Input device
- 1005: Network interface
- 2005: Connection interface
- 9001: Data center
- 9002: Rack
- 9003: Gateway
- 9004: Switch
- 9005: Calculator resource

## Claims

1. A chain building device comprising:
chain design means for designing a service function chain constituted of a series of service functions included in a communication network, based on a request for a communication service;
test chain design means for designing a test service function chain that passes through a service function being a tested object and does not pass through a service function not being the tested object among service functions constituting the service function chain; and
chain building means for building the service function chain and the test service function chain in the communication network.

2. The chain building device according to claim 1, wherein
the chain design means designs the service function chain including a service function introduced by a user, and
the test chain design means designs the test service function chain with the service function introduced by the user as the tested object.

3. A testing device comprising:
traffic generation measurement means for generating a test traffic and inputting the test traffic to each of the service function chain and the test service function chain being built by the chain building device according to claim 1 or 2, and thus measuring a state and performance of the service function chain and the test service function chain; and
measurement result comparison means for comparing measurement results of the service function chain and the test service function chain.

4. The testing device according to claim 3, further comprising abnormality detection means for detecting an abnormal state of a service function being the tested object, based on a comparison result by the measurement result comparison means.

5. A testing system comprising:
the chain building device according to claim 1 or 2;
packet classification means for classifying a packet in such a way as to which service function chain in the communication network the packet is distributed to; and
packet transfer means for controlling the communication network in such a way as to transfer the packet along a transfer path of a service function chain into which the packet is classified by the packet classification means.

6. The testing system according to claim 5, further comprising the testing device according to claim 3 or 4.

7. A method by a computer device, comprising:
designing a service function chain constituted of a series of service functions included in a communication network, based on a request for a communication service;
designing a test service function chain that passes through a service function being a tested object and does not pass through a service function not being the tested object among service functions constituting the service function chain; and
building the service function chain and the test service function chain in the communication network.

8. A storage medium that stores a program causing a computer device to execute:
a chain design step of designing a service function chain constituted of a series of service functions included in a communication network, based on a request for a communication service;
a test chain design step of designing a test service function chain that passes through a service function being a tested object and does not pass through a service function not being the tested object among service functions constituting the service function chain; and
a chain building step of building the service function chain and the test service function chain in the communication network.

9. A method by a computer device, comprising:
generating a test traffic and inputting the test traffic to each of the service function chain and the test service function chain built by the method according to claim 7, and thus measuring a state and performance of the service function chain and the test service function chain; and
comparing measurement results of the service function chain and the test service function chain.

10. A storage medium that stores a program causing a computer device to execute:
a traffic generation measurement step of generating a test traffic and inputting the test traffic to each of the service function chain and the test service function chain being built by causing a computer device to execute the program according to claim 8, and thus measuring a state and performance of the service function chain and the test service function chain; and
a measurement result comparison step of comparing measurement results of the service function chain and the test service function chain.
